# EUROPEAN PATENT APPLICATION

(11) **EP 3 770 179 A1**
(43) Date of publication of application: **27.01.2021**
(21) Application number: 19188443.6
(22) Date of filing: 25.07.2019
(51) Int. Cl.: C08B 37/00, C08L 5/08, C08L 89/00

(54) **CO-PRODUCTION OF GLYCOSAMINOGLYCANS, PEPTIDES, FAT AND PARTIALLY DECALCIFIED BONES FROM FISH AND ANIMAL BY-PRODUCTS**

(71) Applicant: ViaTalenta Group Ltd., 6300 Zug (CH)
(72) Inventor: Khiari, Zied, Leghbridge Alberta T1J 4J9 (CA); Mason, Beth, Sydney Nova Scotia B1P 6L2 (CA)
(74) Representative: Rentsch Partner AG

(57) **Abstract**

Disclosed is a method for the simultaneous production of fat, fatty acids, glycosaminoglycans, peptides and at least partially demineralized bones, the method comprising the steps of providing marine and animal waste material, preferably generated by the food industry; Mixing the marine and animal waste material with enzymes, preferably viscera enzymes, and a pH reducing composition, and degrading the marine and animal waste material to obtain a mixture of peptides, glycosaminoglycans, fat and partially demineralized bones; Separation of the peptides and the glycosaminoglycans from fat and partially demineralized bones by centrifugation to obtain a mixture of peptides and glycosaminoglycans; Ultrafiltration of the mixture obtained in step c. for separating the peptides from glycosaminoglycans.

## Description

### Field of disclosure

The present invention relates to the production of biomolecules from natural sources, preferably organic plant or animal sources.

### Background, prior art

Fish and meat food processing industries generate significant amounts of by-products which are regarded as wastes and are commonly discarded. Fish and meat wastes constitute an important source of bioactive compounds such as collagen and glycosaminoglycans. Collagen is the most abundant protein of animal origin, representing approximately 30% of total animal protein. Collagen is found in all connective tissue, including bones and skins. It has been reported that the oral ingestion of hydrolyzed collagen, which are also termed collagen peptides, promotes collagen synthesis in the skin and increases the size of collagen fibrils in the dermis. Results from clinical studies showed that the daily intake of collagen peptides improves the hydration of skin and prevents the wrinkle formation.

The industrial production of collagen peptides requires two separate steps. In the first step, gelatin is extracted and purified, and in the second step collagen peptides are enzymatically produced, sterilized, and finally dried. The extraction of gelatin is time and energy consuming. For instance, the production of type A gelatin (i.e., acid pre-treated by-products) requires up to 30 h of pretreatment, whereas type B gelatin (i.e., alkali pre-treated by-products) requires an even longer pretreatment period. For both gelatin types, the extraction is performed in four to five successive batch operations, each lasting from 4 to 8 h using elevated temperatures from 55 to 100°C.

Glycosaminoglycans are acidic polysaccharides found with high concentration in cartilaginous tissues. Glycosaminoglycans have a wide range of applications in the pharmaceutical, cosmetic and food industry. In health food markets, glycosaminoglycans are popular dietary supplement for joint care. The oral administration of glycosaminoglycans was reported to be beneficial in the treatment of osteoarthritis. Bovine nasal and tracheal cartilage and shark cartilage are the most common sources of commercial glycosaminoglycans. However, bovine tissues are suggested to have potential risks of infectious diseases, such as bovine spongiform encephalopathy, and the supply of shark cartilage may be limited given the endangered status of this specie.

Glycosaminoglycan production involves the isolation of raw cartilage followed by a hydrolysis step that breaks down the proteoglycan core. Subsequently, the proteins are eliminated and the glycosaminoglycans are recovered and purified. The hydrolysis is commonly performed using alkaline treatment with high concentrations of NaOH, urea or guanidine·HCl. The deproteinization is achieved by trichloroacetic acid mediated precipitation. Purification is carried out by means of gel filtration and/or ion-exchange and size-exclusion chromatography.

For fish oil, the primary extraction method is based on a wet pressing technique. The fish material is first heated to elevated temperatures of about 95°C, which breaks down the tissue material and separates water and oil from proteins. The oil is then separated and recovered by centrifugation.

### Summary of disclosure

Currently, there is no process which simultaneously produces fat, glycosaminoglycans, peptides and at least partially demineralized bones. Specific processes are designed for each compound of interest. These are typically time and energy communing and generate large amounts of toxic effluents.

It is therefore a general object of the present invention to advance the state of the art in regard of the production of fat, glycosaminoglycans, peptides fatty acids and at least partially demineralized bones from animal waste material. In particular, it is an object of the present invention to at least partially overcome the disadvantages of the prior art.

In advantageous embodiments, a method for producing fat, fatty acids, glycosaminoglycans, peptides and at least partially demineralized bones from animal marine waste material, which requires less energy and time than the methods of the prior art.

The general object is achieved by the subject-matter of the independent claim. Further preferred embodiments follow from the dependent claims, the description and the figures.

According to an aspect of the invention, a method for the simultaneous production of fat, glycosaminoglycans, peptides, fatty acids and at least partially demineralized bones is provided, comprising the steps:
a. providing marine and animal waste material, preferably generated by the food industry;
b. mixing the marine and animal waste material with enzymes, preferably viscera enzymes, and a pH reducing composition, and degrading the marine and animal waste material to obtain a mixture of peptides, glycosaminoglycans, fat and partially demineralized bones;
c. separation of the peptides and the glycosaminoglycans from fat, fatty acids and partially demineralized bones by centrifugation to obtain a mixture of peptides and glycosaminoglycans;
d. ultrafiltration of the mixture obtained in step c. for separating the peptides from glycosaminoglycans.

In some embodiments, the pH reducing composition is selected from an acid, preferably an organic or mineral acid, or acid producing bacteria, preferably lactic acid bacteria, and a sugar.

The use of acid producing bacteria is beneficial, as these allow for significantly smoother reaction conditions.

In further embodiments, step b. is performed at 20 °C to 40 °C, preferably at 35 to 38 °C. A temperature of about 37 °C is optimal for a fast degradation of the waste material.

In some embodiments, ultrafiltration in step d. is performed with a cut-off of between 3-10 KDa.

In further embodiments, soluble glycosaminoglycans are recovered by addition precipitation with an alcoholic solvent. For example, methanol, ethanol or isopropanol may be used.

In a further embodiment, fatty acids are refined to their omega 3 and 6 classes through distillation.

In some embodiments, the separated at least partially demineralized bones are further converted into ossein and/or gelatin, in particular by exposing the partially demineralized bones to acid and optionally thermal energy. For example, the partially demineralized bones may be exposed to boiling aqueous HCl, HNO₃ or H₂SO₄.

In further embodiments, the enzymes of step b. comprise endogenous acidic proteases of microbiological, plat or animal origin.

In some embodiments, step b. is performed for 12 to 72 h.

Typically, the peptides produced by any of the embodiments described herein comprise collagen.

### Description of the figures

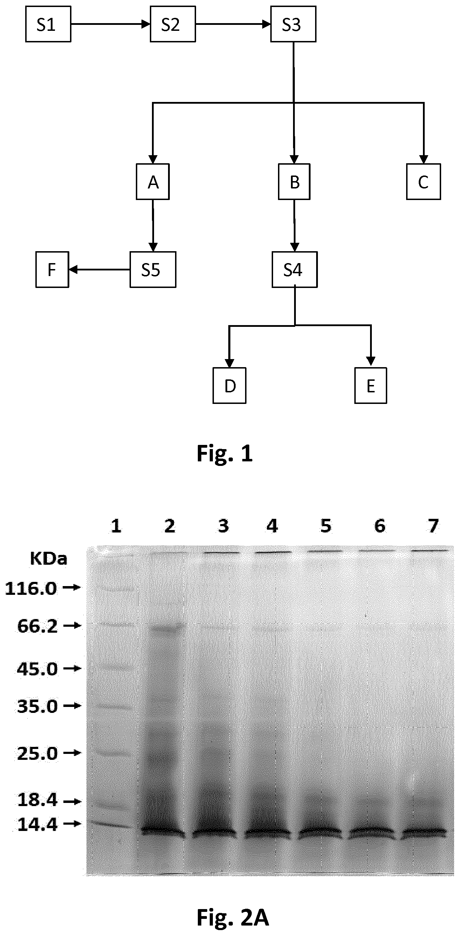

Fig. 1 shows general description of the degradation of fish and animal wastes. In step S1, fish and animal waste material is provided. In step S2, the waste material is mixed with enzymes and the pH reducing composition (for example formic acid or lactose and lactic acid bacteria) and degraded to produce a mixture of peptides (D), glycosaminoglycans (E), fat (C) and partially demineralized bones (A). The hydrolysis of proteins is carried out for a determined period of time. In step S3, peptides and the glycosaminoglycans are separated by centrifugation from fat and partially demineralized bones generating separated partially demineralized bones (A), a mixture (B) of peptides (D), glycosaminoglycans (E) and separated fat (C). Partially demineralized bones (A) are in a further step S5 converted into ossein by exposure to boiling aqueous mineral acid. Mixture (B) is separated into peptides (D) and glycosaminoglycans (E) by ultrafiltration (step S4). The glycosaminoglycans are then recovered by ethanol precipitation.
Fig. 2A shows a typical sodium dodecyl sulfate polyacrylamide gel electrophoresis protein patterns obtained from the acid-assisted process showing the degradation of high molecular weight proteins in the waste materials into smaller peptides. The hydrolysis was followed at different time points up to 72h. In this figure, lane 1 represents the molecular weight markers (14.4-116 kDa); lane 2 represents 0 h hydrolysis; lane 3 represents 6 h hydrolysis; lane 4 represents 12 h hydrolysis; lane 5 represents 24 h hydrolysis; lane 6 represents 48 h hydrolysis and lane 7 represents 72 h hydrolysis.

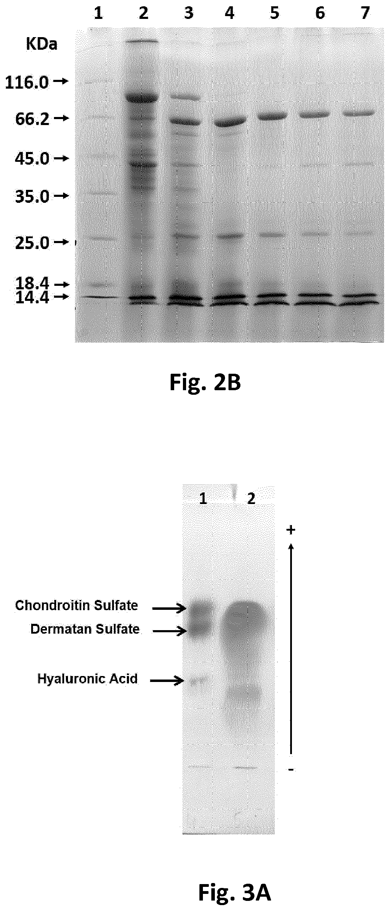

Fig. 2B shows a typical sodium dodecyl sulfate polyacrylamide gel electrophoresis protein patterns obtained from the microbial-assisted process showing the degradation of high molecular weight proteins in the waste materials into smaller peptides. The hydrolysis was followed at different time points up to 72h. In this figure, lane 1 represents the molecular weight markers (14.4-116 kDa); lane 2 represents 0 h hydrolysis; lane 3 represents 6 h hydrolysis; lane 4 represents 12 h hydrolysis; lane 5 represents 24 h hydrolysis; lane 6 represents 48 h hydrolysis and lane 7 represents 72 h hydrolysis.
Fig. 3A shows a typical cellulose acetate electrophoresis glycosaminoglycans patterns obtained from the acid-assisted process showing the type of glycosaminoglycan (sulfated and/or non-sulfated) present in the precipitated final sample. Lane 1 represents a standard mixture of glycosaminoglycans comprising hyaluronic acid, dermatan sulfate and chondroitin sulfate; lane 2 represents the glycosaminoglycans in the precipitated final sample.

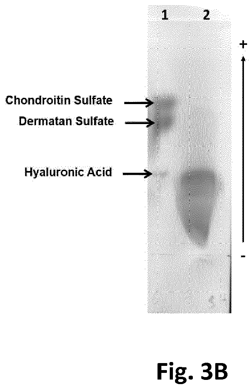

Fig. 3B shows a typical cellulose acetate electrophoresis glycosaminoglycans patterns obtained from the microbial-assisted process showing the type of glycosaminoglycan (sulfated and/or non-sulfated) present in the precipitated final sample. Lane 1 represents a standard mixture of glycosaminoglycans comprising hyaluronic acid, dermatan sulfate and chondroitin sulfate; lane 2 represents the glycosaminoglycans in the precipitated final sample.

## Claims

1. Method for the simultaneous production of fat, fatty acids, glycosaminoglycans, peptides and at least partially demineralized bones, the method comprising the steps:
a. providing marine and animal waste material, in particular generated by the food industry;
b. mixing the and animal waste material with enzymes, preferably viscera enzymes, and a pH reducing composition, and degrading the marine and animal waste material to obtain a mixture of peptides, glycosaminoglycans, fat and partially demineralized bones;
c. separation of the peptides and the glycosaminoglycans from fat and partially demineralized bones by centrifugation to obtain a mixture of peptides and glycosaminoglycans;
d. ultrafiltration and fractionation of the mixture obtained in step c. for separating the peptides and fatty acids from glycosaminoglycans.

2. The method according to claim 1, wherein the pH reducing composition is selected from an acid, preferably an organic or mineral acid, or acid producing bacteria, preferably lactic acid bacteria, and a sugar.

3. The method according to any of the previous claims, wherein step b. is performed at 20 °Cto 40 °C, preferably at 35 to 38 °C.

4. The method according to any of the previous claims, wherein in step d. ultrafiltration is performed with a cut-off of between 3-10 KDa.

5. The method according to any of the previous claims, wherein soluble glycosaminoglycans are recovered by addition precipitation with an alcoholic solvent.

6. The method according to any of the previous claims, wherein the separated at least partially demineralized bones are further converted into ossein and/or gelatin, in particular by exposing the partially demineralized bones to acid and optionally thermal energy.

7. The method according to any of the previous claims, wherein the enzymes of step b. comprise endogenous acidic proteases of microbiological, plat or animal origin.

8. The method according to any of the previous claims, wherein step b. is performed for 12 to 72 h.
